Europäisches Patentamt

European Patent Office

Office européen des brevets

(11) Veröffentlichungsnummer: **0 307 550**
**A1**

## EUROPÄISCHE PATENTANMELDUNG

(21) Anmeldenummer: 88109601.0

(22) Anmeldetag: 16.06.88

(51) Int. Cl.4: **B25J 17/02 , B25J 15/00 , B24B 27/04**

Die Bezeichnung der Erfindung wurde geändert (Richtlinien für die Prüfung im EPA, A-III, 7.3).

(30) Priorität: 11.09.87 DE 3730516

(43) Veröffentlichungstag der Anmeldung: 22.03.89 Patentblatt 89/12

(84) Benannte Vertragsstaaten: CH ES FR GB IT LI

(71) Anmelder: **SCHMID & WEZEL**
**Bahnhofstrasse 18/18a**
**D-7133 Maulbronn(DE)**

(72) Erfinder: **Kristof, Michael, Ing, grad.**
**Bannzaunstrasse 28**
**D-7518 Bretten-Diedelsheim(DE)**

(74) Vertreter: **Dreiss, Hosenthien & Fuhlendorf**
**Gerokstrasse 6**
**D-7000 Stuttgart 1(DE)**

(54) Schwenkbare Werkzeugaufnahme für Roboter.

(57) Bei einer auswechselbare Werkzeugaufnahme für eine Werkzeugmaschine, insbesondere Roboter zum Entgraten oder Verputzen von Werkstücken mit einem Sockelteil (2) und einem Werkzeugträgerteil (1) mit gemeinsamer Mittelachse (3), wird zum Schutz des Werkzeugs vor überbeanspruchung bei unerwarteten Werkstoffanhäufungen vorgeschlagen, den Werkzeugträgerteil (1) unter Wirkung einer Ausrichtkraft schwenkbar im Sockelteil (2) anzuordnen.

Fig. 1

EP 0 307 550 A1

## Auswechselbare Werkzeugaufnahme

Die Erfindung betrifft eine auswechselbare Werkzeugaufnahme für eine Werkzeugmaschine, insbesondere einen Roboter zum Entgraten oder Verputzen vor Werkstücken mit einem Sockelteil und einem Werkzeugträger mit gemeinsamer Mittelachse.

Aus der DE-OS 27 41 802 ist es bekannt Werkzeugträger mit ihren Werkzeugen auswechselbar an Werkzeugmaschinen vorzusehen. Aus der DE-OS 34 04 036 ist es bekannt bei einer Werkzeugmaschine zum Verputzen von Kanten einen Werkzeugteil axial verschiebbar auszubilden um unerwünschte Werkzeugbeschädigungen durch besonders harte Gußkanten oder Grate zu verhindern. Bei Robotereinsatz mit programmierter Werkzeugführung können bei ausnahmsweise dicken Graten oder Werkstoffansammlungen Werkzeugbrüche auftreten.

In Vermeidung der geschilderten Nachteile liegt der vorliegenden Erfindung die **Aufgabe** zugrunde eine auswechselbare Werkzeugaufnahme der eingangs genannten Art so zu verbessern, daß auch bei auftretenden, ausfallend großen Werkstoffanhäufungen ein Werkzeug- oder Maschinenschaden sicher verhindert werden kann.

Zur **Lösung** dieser Aufgabe sieht die Erfindung vor, daß der Werkzeugträgerteil unter Wirkung einer Ausrichtkraft schwenkbar im Sockelteil gehalten ist. Hierdurch kann der Werkzeugträgerteil mit dem Werkzeug beim Auftreten eines zu hohen Widerstands ausweichen und so das Werkzeug selbst vor einem Schaden oder Bruch bewahren.

Besonders vorteilhaft kann die Ausrichtkraft einstellbar oder durch eine Vorgabeeinrichtung steuerbar sein. Damit kann dann auch der gewünschte Bearbeitungsdruck und damit die Abtraggeschwindigkeit beeinflußt werden, so daß eine wesentlich bessere und exaktere Bearbeitung insbesondere beim Entgraten oder Verputzen von Werkstücken, insbesondere Gußwerkstücken erfolgen kann. Die Ausrichtkraft kann besonders einfach durch mindestens eine Feder aufgebracht werden. Ein wesentlich größerer Einstellbereich der Ausrichtkraft kann aber bei Verwendung von einem oder mehreren druckbelasteten Kolben erfolgen, wobei dann der Beaufschlagungsdruck der Kolben einstellbar oder steuerbar sein kann.

Zur schwenkbaren Halterung des Werkzeugträgerteils im Sockelteil kann der Werkzeugträgerteil einen rotationssymmetrischen Bund aufweisen mit einer Ausrichtfläche, wobei diese Ausrichtfläche in der Ruhelage an einer Ausrichtgegenfläche des Sockelteils unter Vorspannung nachgiebig anliegt. Besonders vorteilhaft kann der Außenrand des rotationssymmetrischen Bunds ballig ausgebildet und durch eine zylindrische Zentrierfläche des Sockelteils gegenüber der Mittelachse des Sockelteils zentriert gehalten sein, so daß bei einem Ausschwenken keine Verkant- oder Verklemmgefahr, aber auch kein unerwünschtes Spiel entsteht. Zweckmäßigerweise ist der Krümmungsradius des ballig ausgebildeten Außenrands des Bunds entsprechend dem halben Durchmesser der zylindrischen Zentrierfläche des Sockelteils ausgebildet.

Der Werkzeugträgerteil ist gegenüber dem Sockelteil drehgesichert, besonders einfach durch Nut- und Paßstift.

Besonders hohe, leicht beherrschbare Ausrichtkräfte kann man dadurch erreichen, daß am Umfang des Sockelteils verteilt mindestens zwei druckbelastet Kolben vorgesehen sind, durch die die Ausrichtfläche des Bunds des Werkzeugträgers gegen die Ausrichtgegenfläche des Sockelteils gepreßt ist. wobei die Kolben in zylindrischen, vorzugsweise parallel zur Mittelachse verlaufenden Bohrungen dicht und verschiebbar geführt sind.

Bei einer auswechselbaren Werkzeugaufnahme mit mindestens zwei unabhängig mit jeweils einem Druckmedium versorgbaren Druckmediumzuleitungskanälen im Sockelteil können besonders vorteilhaft über einen der Kanäle Druckmedium zum Antrieb des Werkzeugs im Werkzeugträgerteil und über den anderen Druckmediumzuleitungskanal die Kolben druckbeaufschlagt sein. Die druckbelasteten Kolben können besonders gleichmäßig über einen Ringkanal im Sockelteil druckbeaufschlagbar sein. Der Ringkanal kann durch eine Kreisnut in einer Sockelplatte und einem ringförmigen Zwischenteil gebildet sein, wobei die parallel zur Mittelachse verlaufenden Bohrungen mit ihren Kolben im ringförmigen Zwischenteil vorgesehen sind.

Der ringförmige Zwischenteil weist die zylindrische Zentrierfläche für den Außenrand des Bunds des Werkzeugträgerteils auf. Die Enden der Kolben ragen in eine die zylindrische Zentrierfläche bildende und den Bund aufnehmende Ausnehmung hinein und liegen stirnseitig am Bund an, wobei die Ausnehmung durch einen die Ausrichtgegenfläche des Sockelteils bildenden, vom Werkzeugträgerteil durchdrungenen Deckelring begrenzt ist.

Weitere erfindungsgemäße Ausbildungen sind den Unteransprüchen zu entnehmen und werden mit ihren Vorteilen anhand der beigefügten Zeichnungen in der nachstehenden Beschreibung näher erläutert. Es zeigt:

Figur 1 einen Schnitt durch eine auswechselbare Werkzeugaufnahme;

Figur 2 einen Querschnitt entlang der Linie II-II durch den Sockelteil in Figur 1;

Figur 3 einen Teilschnitt entlang der Linie III-III in Figur 2 durch den Sockelteil und

Figur 4 eine Ansicht auf den Sockelteil in Richtung des Pfeils IV in Figur 1.

Beim in den Figuren dargestellten einzigen Ausführungsbeispiel einer auswechselbaren Werkzeugaufnahme ist ein Werkzeugträgerteil 1 in einem Sockelteil 2 räumlich um eine gemeinsame Mittelachse 3 im Ausführungsbeispiel um etwa +/- 5° schwenkbar. Dazu besteht der Werkzeugträgerteil 1 aus einer Aufnahmehülse 4, in der eine druckluftangetriebene Schleifspindel 5 mit ihrem als Schleifstein oder Hartmetall ausgebildeten Werkzeug 6 konzentrisch zur Mittelachse 3 fest gehalten ist. Die Aufnahmehülse 4 weist einen umlaufenden Bund 7 auf, dessen Außenrand 8 ballig ausgebildet ist und durch eine Zentrierfläche 9 des Sockelteils 2 zentriert ist. Der Krümmungsradius des Außenrands 8 entspricht dem halben urchmesser der zylindrischen Zentrierfläche 9.

DDer Sockelteil 2 weist eine Aufnahmeplatte 10 auf, die von einer Werkzeugmaschine oder einem Roboter aufgenommen werden kann unter gleichzeitiger Herstellung der erforderlichen Versorgungsanschlüsse. Entsprechend sind Druckmediumzuleitungskanäle 11′, 11″ vorgesehen, wie weiter unterschrieben wird. Der Sockelteil 2 weist ferner einen an einer Zwischenplatte 12 befestigten ringförmigen Zwischenteil 13 auf, der eine konzentrisch zur Mittelachse 3 angeordnete Ausnehmung 14 trägt, die durch einen Deckelring 15 verschlossen ist. Der Deckelring 15 ist vom Werkzeugträgerteil 1 durchdrungen und hat eine senkrecht zur Mittelachse 3 verlaufende Ausrichtgegenfläche 16, die mit einer Ausrichtfläche 16 des Bunds 7 des Werkzeugträgerteils 1 zusammenwirkt.

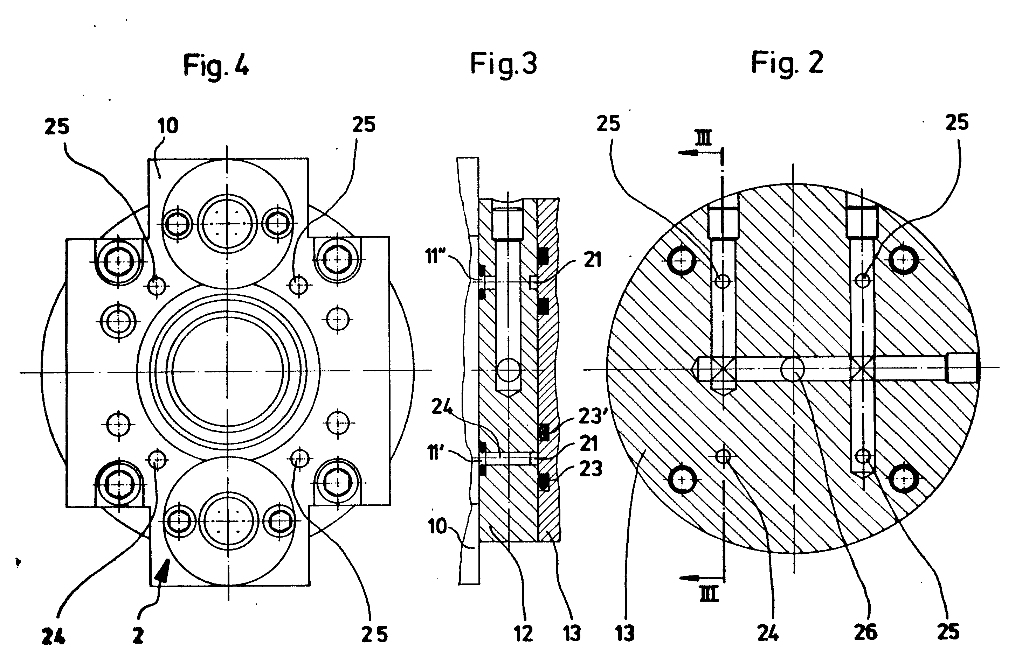

Am Umfang verteilt sind im ringförmigen Zwischenteil 13 in Bohrungen 17 vier Kolben 18 axial parallel zur Mittelachse 3 verschiebbar dicht geführt. Die balligen Stirnseiten 19 der Kolben 18 pressen den Bund 7 mit seiner Ausrichtfläche 17 gegen die Ausrichtgegenfläche 16 des Deckelrings 15, wenn die Druckräume 20 hinter den Kolben 18 mit einem Druckmedium druckbeaufschlagt sind. Zu dieser Druckbeaufschlagung ist in der Zwischenplatte 12 ein Ringkanal 21 vorgesehen, in den Verbindungsbohrungen 22 des Zwischenteils 13 eine Verbindung zu den Druckräumen 20 herstellen. Der Ringkanal 21 ist durch zwei Dichtungsringe 23, 23′ abgedichtet. Der Ringkanal 21 selbst ist, wie in den Figuren 2 und 3 dargestellt, durch eine Bohrung 24 in der Zwischenplatte 12 mit einem Druckmediumzuleitungskanal 11′ in Verbindung.

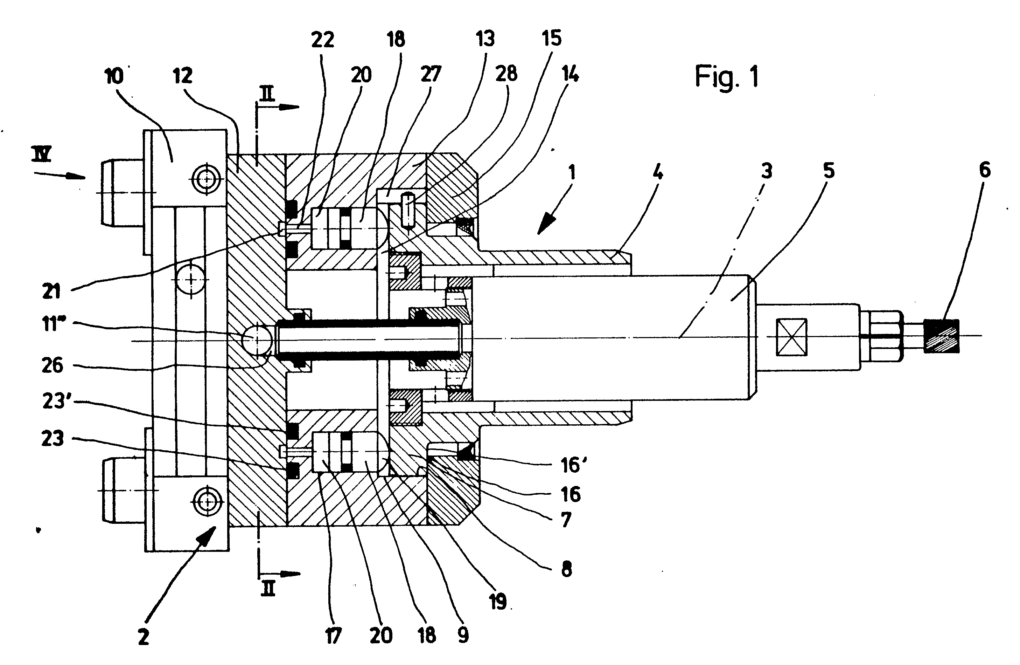

Drei weitere Bohrungen 25 sind, wie in Figur 2 dargestellt, über verschlossene Bohrungen mit dem Druckmediumzuleitungskanal 11″ für die Druckluftversorgung für die Schleifspindel 5 verbunden. Die zentrisch zur Mittelachse 3 gelegene Zuführungsbohrung 26 ist in den Figuren 1 und 2 erkennbar.

Durch eine Nut 27 in der Ausnehmung 14 des ringförmigen Zwischenteils 13 und einen Paßstift 28 im Bund 7 ist der Werkzeugträgerteil 1 gegen Verdrehen im Sockelteil 2 gesichert. Beim Auftreten einer Querkraft P am Werkzeug 6 kann der gesamte Werkzeugträgerteil 1 im dargestellten Ausführungsbeispiel um den Eckbereich in der Nähe des Paßstifts 28 unter Zurückdrücken des unteren Kolbens 18 ausweichen. Der mögliche Ausschwenkwinkel ist abhängig vom axialen Spiel des Bunds 7 in der Ausnehmung 14.

**Ansprüche**

1. Auswechselbare Werkzeugaufnahme für eine Werkzeugmaschine, insbesondere Roboter zum Entgraten oder Verputzen von Werkstücken mit einem Sockelteil (2) und einem Werkzeugträgerteil (1) mit gemeinsamer Mittelachse (3), **dadurch gekennzeichnet**, daß der Werkzeugträgerteil (1) unter Wirkung einer Ausrichtkraft schwenkbar im Sockelteil (2) gehalten ist.

2. Auswechselbare Werkzeugaufnahme nach Anspruch 1, dadurch gekennzeichnet, daß die Ausrichtkraft einstellbar oder durch eine Vorgabeeinrichtung steuerbar ist.

3. Auswechselbare Werkzeugaufnahme nach Anspruch 2, dadurch gekennzeichnet, daß die Ausrichtkraft durch mindestens eine Feder aufgebracht wird.

4. Auswechselbare Werkzeugaufnahme nach Anspruch 2, dadurch gekennzeichnet, daß die Ausrichtkraft durch mindestens einen druckbelasteten Kolben 18 aufgebracht wird.

5. Auswechselbare Werkzeugaufnahme nach Anspruch 1, dadurch gekennzeichnet, daß der Werkzeugträgerteil (1) einen rotationssymmetrischen Bund (7) aufweist, mit einer Ausrichtfläche (16′) und daß diese Ausrichtfläche (16′) in der Ruhelage an einer Ausrichtgegenfläche (16) des Sockelteils (2) anliegt, wobei die Ausrichtflächen (16, 16′) gegeneinander gepreßt sind.

6. Auswechselbare Werkzeugaufnahme nach Anspruch 5, dadurch gekennzeichnet, daß der Außenrand (8) des rotationssymmetrischen Bunds (7) ballig ausgebildet ist und durch eine zylindrische Zentrierfläche (9) des Sockelteils (2) gegenüber der Mittelachse (3) des Sockelteils (2) zentriert gehalten ist.

7. Auswechselbare Werkzeugaufnahme nach Anspruch 6, dadurch gekennzeichnet, daß der Krümmungsradius des ballig ausgebildeten Außenrands (8) des Bunds (7) dem halben Durchmesser der zylindrischen Zentrierfläche (9) des Sockelteils (2) entspricht.

8. Auswechselbare Werkzeugaufnahme nach einem der Ansprüche 1 bis 7, dadurch gekennzeichnet, daß der Werkzeugträgerteil (1) gegenüber dem Sockelteil (2) drehgesichert ist.

9. Auswechselbare Werkzeuaufnahme nach Anspruch 8, dadurch gekennzeichnet, daß als Drehsicherung eine Nut (27) und ein in diese eingreifender Vorsprung, vorzugsweise in Form eines Paßstifts (28) dienen.

10. Auswechselbare Werkzeugaufnahme nach einem der Ansprüche 4 bis 9, dadurch gekennzeichnet, daß am Umfang des Sockelteils (2) verteilt mindestens zwei druckbelastete Kolben (18) vorgesehen sind, durch die die Ausrichtfläche (16') des Bunds (7) des Werkzeugträgerteils (1) gegen die Ausrichtgegenfläche (16) des Sockelteils (2) gepreßt ist.

11. Auswechselbare Werkzeugaufnahme nach einem der Ansprüche 4 bis 10, dadurch gekennzeichnet, daß die Kolben (18) in zylindrischen, parallel zur Mittelachse (3) verlaufenden Bohrungen (17) dicht und verschiebbar geführt sind.

12. Auswechselbare Werkzeugaufnahme nach Anspruch 4 mit mindestens zwei unabhängig vom Druckmedium versorgbaren Druckmediumzuleitungskanälen (11) im Sockelteil (2), **dadurch gekennzeichnet**, daß über einen der Kanäle (11″) Druckmedium zum Antrieb des Werkzeugs (6) im Werkzeugträgerteil (1) und über den anderen Druckmediumzuleitungskanal (11″) die Kolben (18) druckbeaufschlagt sind.

13. Auswechselbare Werkzeugaufnahme nach Anspruch 10, dadurch gekennzeichnet, daß die druckbelasteten Kolben (18) über einen Ringkanal (21) im Sockelteil (2) gleichmäßig druckbeaufschlagbar sind.

14. Auswechselbare Werkzeugaufnahme nach Anspruch 11 und 13, dadurch gekennzeichnet, daß der Ringkanal (21) durch eine Kreisnut in einer Zwischenplatte (12) und einem ringförmigen Zwischenteil (13) gebildet ist, wobei die parallel zur Mittelachse (3) verlaufenden Bohrungen (17) mit ihren Kolben (18) im ringförmigen Zwischenteil (13) vorgesehen sind.

15. Auswechselbare Werkzeugaufnahme nach Anspruch 14, dadurch gekennzeichnet, daß der ringförmige Zwischenteil (13) die zylindrische Zentrierfläche (9) für den Außenrand (8) des Bunds (7) des Werkzeugträgerteils (1) aufweist, wobei die Stirnseiten (19) der Kolben (18) in eine die zylindrische Zentrierfläche (9) bildende und den Bund (7) aufnehmende Ausnehmung (14) hineinragen und die Stirnseiten (19) der Kolben (18) am Bund (7) anliegen, wobei die Ausnehmung (14) durch einen die Ausrichtgegenfläche (16) des Sockelteils (2) bildenden vom Werkzeugträgerteil (1) durchdrungenen Deckelring (15) begrenzt ist.

16. Auswechselbare Werkzeugaufnahme, nach Anspruch 12, dadurch gekennzeichnet, daß mehrere unabhängige Druckmediumzuleitungskanäle (11″) im Sockelteil (2) zu einem gemeinsamen Kanal (Zuführungsbohrung 26) für die Druckmediumversorgung des vom Werkzeugträgerteil (1) getragenen Werkzeugs (Schleifspindel 5) zusammengefaßt sind (Figur 2).

17. Auswechselbare Werkzeugaufnahme, nach einem der Ansprüche 4 bis 16, dadurch gekennzeichnet, daß als Druckmedium für die Druckbeaufschlagung der Kolben (18) Druckluft dient.

Fig. 1

Fig. 2

25

25

26

24

25

13

III

III

Fig.3

21

23' 21 23

13

12

11"

24

11'

10

Fig.4

25

25

10

2

25

25

24

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 524 364 (OSAKA TRANSFORMER) * Seite 6, Zeile 30 - Seite 7, Zeile 29; Seite 13, Zeile 29 - Seite 14, Zeile 9 * | 1-5,17 | B 25 J 17/02 B 25 J 15/00 B 24 B 27/04 |
| Y | | 6-11 | |
| A | | 12 | |
| | --- | | |
| P,X | WO-A-8 801 555 (ERICKSON TOOL) * Seite 4, Zeile 9 - Seite 5, Zeile 26; Seite 6, Zeilen 7-33; Seite 8, Zeilen 3-14 * | 1-5,17 | |
| | --- | | |
| X | PROCEEDINGS 1987 IEEE INTERNATIONAL CONFERENCE ON ROBOTICS A ND AUTOMATION, Band 2, 31. März - 3. April 1987, Seiten 758-766; The Institute of Electrical and Electronics Engineers, Inc. US; H. KAZEROONI et al.: "Direct-Drive, Active Compliant End-Effector" * Seite 761; Figur 6 * | 1 | |
| | --- | | RECHERCHIERTE SACHGEBIETE (Int. Cl.4) |
| Y | GB-A-2 158 806 (KUKA) * Seite 2, Zeilen 67-71; Seite 3, Zeilen 6-12 * | 6-9 | B 25 J B 24 B |
| | --- | | |
| Y | EP-A-0 149 806 (IBM) * Seite 7, Zeilen 10-22 * | 10,11 | |
| | --- | | |
| A | EP-A-0 194 022 (PROCESS EQUIPMENT) * Seite 8, Zeilen 15-25 * | 13,14 | |
| | --- | | |
| A | EP-A-0 205 985 (DINSE) | | |
| | --- | | |
| A | US-A-4 514 616 (WARNER) | | |
| | --- -/- | | |

Der vorliegende Recherchenbericht wurde für alle Patentansprüche erstellt

| Recherchenort | Abschlußdatum der Recherche | Prüfer |
|---|---|---|
| DEN HAAG | 12-12-1988 | LAMMINEUR P.C.G. |

Europäisches
Patentamt

Nummer der Anmeldung

EP  88 10 9601

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 578 774  (AVIONS M. DASSAULT) <br> ----- | | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| DEN HAAG | 12-12-1988 | LAMMINEUR P.C.G. |